Europäisches Patentamt

European Patent Office

Office européen des brevets

(19)

(11) **EP 0 430 811 B1**

(12) **EUROPEAN PATENT SPECIFICATION**

(45) Date of publication and mention
of the grant of the patent:
**10.01.1996  Bulletin 1996/02**

(51) Int Cl.6: **G11B 20/10**, G11B 7/00,
G11B 11/10

(21) Application number: **90403403.0**

(22) Date of filing: **29.11.1990**

(54) **Magneto-optical signal reproducing apparatus**

Optomagnetisches Signalwiedergabegerät

Appareil de reproduction de signaux, utilisant l'effet magnéto-optique

(84) Designated Contracting States:
**DE FR GB**

(30) Priority: **29.11.1989 JP 310353/89**

(43) Date of publication of application:
**05.06.1991  Bulletin 1991/23**

(73) Proprietor: **SONY CORPORATION
Tokyo (JP)**

(72) Inventors:
• **Watanabe, Tetsu
Shinagawa-ku, Tokyo (JP)**
• **Yamagami, Tamotsu
Shinagawa-ku, Tokyo (JP)**
• **Kawashima, Tetsuji
Shinagawa-ku, Tokyo (JP)**

(74) Representative: **Thévenet, Jean-Bruno et al
F-75340 Paris Cédex 07 (FR)**

(56) References cited:
**EP-A- 0 322 817         US-A- 3 720 923
US-A- 4 961 182**

# Description

## BACKGROUND OF THE INVENTION

### Field of the Invention

This invention relates to a magneto-optical signal reproducing apparatus for reproducing data from a magneto-optical signal from a magneto-optical recording medium.

### Related Art Statement

Generally, in a magneto-optical signal reproducing method, there is adopted an approach to irradiate a laser beam, etc. to a magneto-optical recording medium, for example a magneto-optical disk, etc. to detect a reflected light (or a transmitted light) by means of a photo detector, etc. of an optical pickup device to provide a difference between polarized light components different from each other to thereby provide a magneto-optical signal to level-discriminate this magneto-optical signal on the basis of a predetermined reference level, so called a threshold level to provide a binary signal to implement demodulate/decode processing to the binary signal, thus to reproduce data therefrom.

Meanwhile, when a signal level detected by a photo detector, etc. of an optical pickup changes by defects of a recording medium of a magneto-optical disk, etc., disturbances at the time of recording or reproducing, or the like, there is the possibility that level discrimination in the binarization is not normally conducted.

For this reason, in the prior art, the magneto-optical signal provided from the optical pickup device is delivered to an AGC (automatic gain control) circuit, thus allowing that circuit to conduct an automatic gain control, etc. However, for example in the case of a magneto-optical storage disk, a signal has a broad frequency band of 10 to 20 MHz. As a result, a high speed AGC is required. Such a high speed AGC circuit is not preferable in that the circuit configuration becomes complicated, and/or the cost is increased.

US-A-4961182 reflected in the prior art portion of claim 1 describes a system for extracting data from a magneto-optical signal reproduced from a magneto-optical disc. The magneto-optical disc is read using an optical pickup device so as to produce a magneto-optical signal. This magneto-optical signal may be binarised by comparing it with a reference level based upon a digitised in-phase signal component provided from the image pickup device.

## SUMMARY OF THE INVENTION

It is an object of the present invention to provide a magneto-optical signal reproducing apparatus adapted to permit normal reproducing of data with a simple circuit configuration with respect to changes in the level of the magneto-optical reproducting signal

The present invention provides a magneto-optical signal reproducing apparatus for reproducing a data sequence from a magneto-optical signal provided by reading out a signal recorded on a magneto-optical recording medium by means of an optical pickup device, the apparatus comprising:

means for binarising said magneto-optical signal, said binarising means comprising means for comparing the magneto-optical signal with a reference level; and
reference level controlling means for controlling said reference level in dependency upon a level of a digitised in-phase signal component provided from said optical pickup device, characterised in that the reference level controlling means is adapted to control the reference level, during reproduction of a magneto-optical signal from a data area of the recording medium, in dependency on a ratio between the in-phase signal component provided from said optical pickup device reading said data area and an in-phase signal component reproduced from a trial writing area provided in a recording area of the recording medium.

## BRIEF DESCRIPTION OF THE DRAWINGS

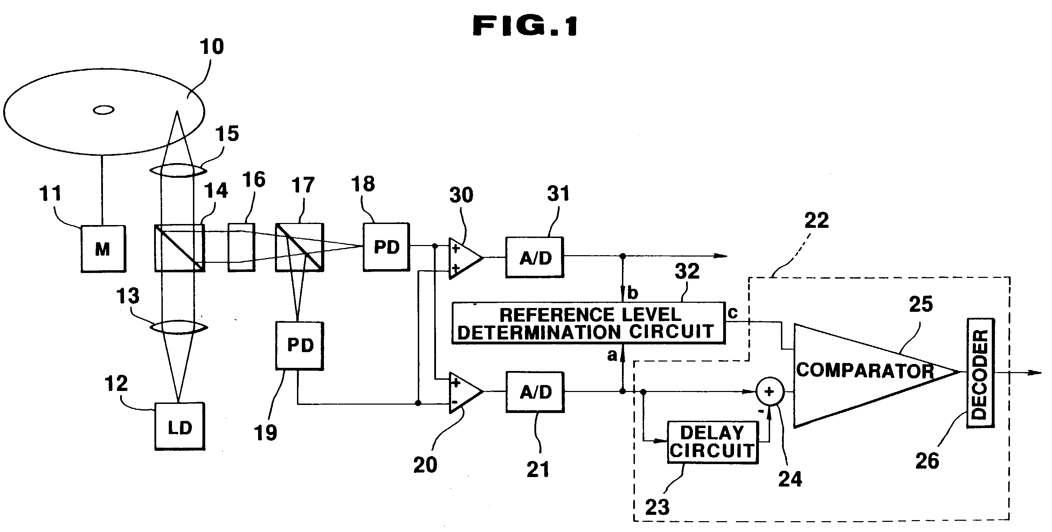

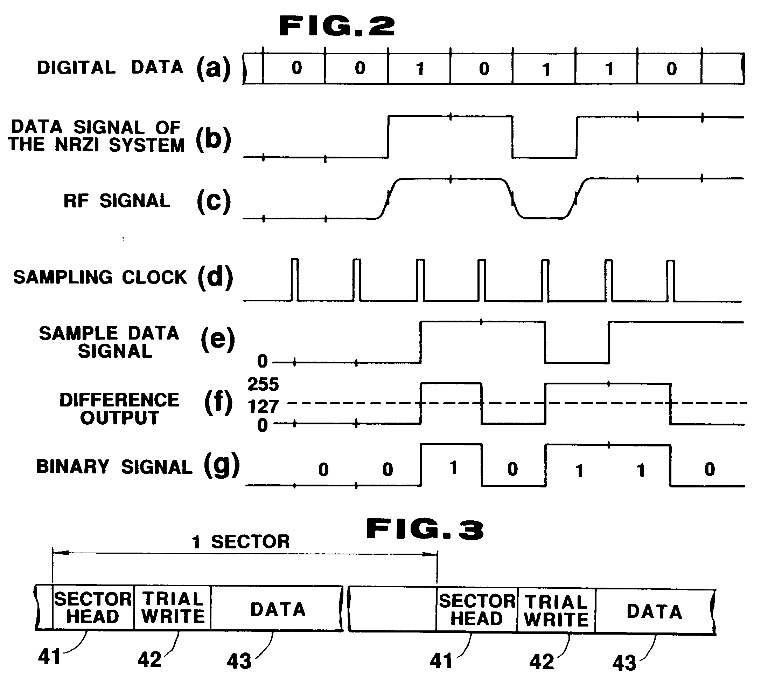

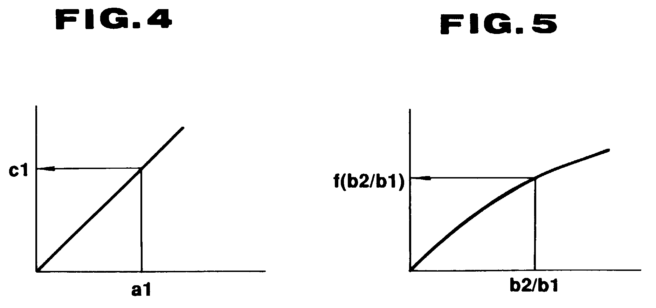

FIG. 1 is a block diagram showing an outline of the configuration of a device to which an embodiment of a magneto-optical signal reproducing apparatus according to this invention is applied, FIG. 2 is a time chart for explaining the binarization operation, FIG. 3 is a diagram showing an embodiment of a medium recording format, and FIGS. 4 and 5 are graphs for explaining the reference level determination operation, respectively.

## DESCRIPTION OF THE PREFERRED EMBODIMENT

FIG. 1 is a circuit diagram schematically showing, in a block form, a magneto-optical signal reproducing device for explaining an embodiment of a magneto-optical signal reproducing apparatus according to this invention.

In FIG. 1, a magneto-optical disk 10 is of a structure such that, for example, a perpendicular magnetic anisotropic film having the magneto-optical effect is formed on a transparent substrate. This magneto-optical disk 10 is rotationally driven by a spindle motor 11 at a constant line velocity (CLV) or a constant angular velocity (CAV). A laser beam from a laser light source 12 (laser diode, etc.) for reproducing is changed to a parallel light beam by a collimator lens 13, and is then irradiated onto the magneto-optical disk 10 through a beam splitter 14 and an object lens 15 of so called a biaxial device for focusing and tracking. A reflected light beam from the magneto-optical disk 10 is split by the beam splitter 14, and is then incident to a polarization beam splitter 17 through an optical system 16 such as a half-wave plate, a focusing lens, and a cylindrical lens, etc. At the polarization beam splitter 17, the reflected light beam incident thereto is split into so called a P-polarized light component and a S-polarized light component. These components are incident to photo detectors 18 and 19 for detecting a tracking error signal, a focus error signal, and a magneto-optical signal (MO signal), etc.

Outputs from these photo detectors 18 and 19 are delivered to a differential amplifier 20, at which a difference therebetween is provided. Thus, an information signal (magneto-optical (MO) signal) component recorded magneto-optically is extracted. Then, an output magneto-optical signal from the differential amplifier 20 is converted to a digital signal at an A/D converter 21. The digital signal thus obtained is delivered to a record information (data) reproducing circuit 22.

Further, outputs from the photo detectors 18 and 19 are delivered to a summing amplifier 30, at which a sum of them is provided. Thus, an in-phase signal component, i.e., a signal component based on detection of changes in the coefficient of reflection by pits or grooves, etc. can be provided. The in-phase signal component from the summing amplifier 30 is converted to a digital signal, for example, at an A/D converter 31. The digital signal thus obtained is used for tracking control etc., and is also delivered to a reference level determination circuit 32 at the same time. Namely, the discrimination level (threshold value) of binarization for reproducing of data which will be described later is controlled in dependency upon the level of the in-phase signal component.

As the data reproducing circuit for the magneto-optical signal, various configurations are conceivable. In the data reproducing circuit 22 of this embodiment, such a configuration to level-discriminate a difference output obtained by providing level differences every clock of a magneto-optical signal on the basis of a predetermined threshold value is used for the binarization section of the first stage. Namely, a magneto-optical signal delivered to the data reproducing circuit 22 is delayed by a delay circuit 23. Then, the signal thus delayed is substracted from the original magneto-optical signal by an adder 24. Thus, a difference every clock is provided. The difference output thus obtained is delivered to a comparator 25, at which level discrimination is made using the reference level from the reference level determination circuit 32 as a threshold value. Thus, a binary output is provided. This binary output is delivered to a decoder 26 for making demodulate processing or decode processing, etc., at which reproducing of record information data is carried out.

As stated above, the threshold value in binarization of the first stage of the data reproducing circuit 22 is the reference level outputted from the reference level determination circuit 32. This reference level is determined in dependency upon the level b of the in-phase signal component (i.e., a detection signal of changes in coefficient of reflection by pits or grooves, etc.). Namely, by taking into consideration the fact that a level change similar to a level change of a magneto-optical signal by defects, etc. of the magneto-optical disk 10 serving as a recording medium is produced also in the in-phase signal component, the threshold value of binarization is changed following changes in the level of the in-phase signal component. Thus, threshold value of binarization varies in dependency upon changes in the level of the magneto-optical signal, so stable binarization is carried out.

Meanwhile, the configuration of the binarization circuit section provided at the input stage of the data reproducing circuit 22 of Fig. 1 is already disclosed in the specification and the drawings of the Japanese Laid Open Patent No 3-88175 by the applicant of this case. This circuit configuration has an excellent characteristic particularly in edge detection of so called an edge-recorded signal. Namely, an attempt is assumed to be made to edge-record a digital data train, for example as shown in FIG. 2(a). To realize this, when that data train is converted to, for example, a signal as shown in FIG. 2(b) of the NRZI system to record it on a magneto-optical disk to reproduce it by an optical pickup device, a waveform distortion, for example, as shown in FIG. 2(c) may be produced in the magneto-optical signal, or so-called D.C. drift, and the like due to superposition of D.C. component may be produced therein. The magneto-optical signal thus obtained is sampled by a sampling clock of FIG. 2(d) using, for example a synchronization clock, etc., and is subjected to A/D conversion (A/D converter 21 of FIG. 1). Thus, a digital sample data signal as shown in FIG. 2(e) is provided. By providing a difference between the sample data signal and a signal before one sample at the adder 24, a difference output signal as shown in FIG. 2(f) is provided. By level-discriminating the difference output of FIG 2(f) using a predetermined level (for example, an intermediate level 127 when the level range is 0 to 255) as a threshold value at the comparator 25, a binary signal as shown in FIG. 2(g) is provided. As stated above, an approach is employed to provide a difference between respective signals sampled by a synchronization clock, etc. to level-discriminate this difference on the basis of a reference level, thus making it possible to precisely make a binarization without raising the noise component of the high frequency band, and to tolerate a D.C. drift, etc. thus to cope with even a modulated waveform which is not so called DC-free. It is to be noted that the above-mentioned synchronization clock may be provided by detecting a synchronous bit in the servo area of an optical disk of the so-called sample servo system to provide synchronization of the PLL circuit, or may be provided by extracting a clock component of a signal of the self-clock system.

In the actual embodiment shown in FIG. 1, a digitalized magneto-optical signal from the A/D converter 21 is also delivered to the reference level (threshold value) determination circuit 32. This provides a function to detect a level of a magneto-optical signal in a trial write area 42, e.g., every sector of the recording format shown in FIG. 3 to initialize the reference level (threshold value). Namely, FIG. 3 shows an actual example of a recording format of the track of the magneto-optical disk 10. In FIG. 3, so-called a preamble area or a sector head area 41 is provided at the leading position of each sector of the recording track, and the trial write area 42 is provided between the sector head area 41 and a data recording area 43. Generally, this trial write area 42 is an area for recording a predetermined monitor data or pattern at the time of recording data in order to monitor a laser power intensity or adjust a clock phase of record data in the case of the so-called sample servo system. In addition to the above, in this embodiment, a predetermined data or pattern is magneto-optically recorded at the time of recording data for initialization of the threshold level of the magneto-optical signal. It is of course that there may be provided a trial write area 42 exclusive for initialization of the threshold level.

At the time of reproducing, a level $a_1$ of a magneto-optical signal provided from the A/D converter 21 at the timing when the trial write area 42 is scanned is detected to deliver the level $a_1$ thus detected to the reference level determination circuit 32 to thereby determine a reference level $c_1$ (or a reference level control signal). This reference level $c_1$ has a relationship substantially proportional to the magneto-optical signal level $a_1$ or a linear relationship therewith. Accordingly, that reference level $c_1$ can be easily determined. The reference level $c_1$ from the reference level determination circuit 32 is delivered as a discriminative threshold value to the comparator 25 for discrimination and binarization of level. Further, during scanning time of the trial write area 42, the level $b_1$ of the in-phase signal component provided from the A/D converter 31 is delivered to the reference level determination circuit 32. At the time of reproducing (at the time of scanning of the data area 43), a reference level $c_2$ serving as the discriminative threshold value is determined by the equation, for example, expressed below:

$$c_2 = a_1 \times f(b_2/b_1)$$

in dependency upon the ratio $b_2/b_1$ between the levels $b_2$ and $b_1$ of the in-phase signal component provided from the A/D converter 31. Here, $f(b_2/b_1)$ in the above equation is expressed as a function curve, for example as shown in FIG. 5, and is chiefly based on the characteristic of the optical system. In order to determine $f(b_2/b_1)$ from the value $b_2/b_1$ of the ratio in this case, a procedure may be taken to prepare an approximate function from measurement data, etc. to calculate the value of $f(b_2/b_1)$ by the computational processing, or to provide an implementation as a ROM table to implement data conversion processing. It is to be noted that, in the case of providing an implementation as a ROM table, it is sufficient to prepare such a table to directly make a conversion to the reference level $c_2$ from the value $b_2/b_1$ to output it.

In a manner stated above, by controlling the binary discrimination level (the reference level) in reproducing of data of the magneto-optical signal on the basis of the magneto-optical signal level $a_1$ and the in-phase signal level $b_1$ in the trial write area 42 and the in-phase signal level $b_2$ in the data area 43, even if the magneto-optical signal level varies by medium defects, etc. in the data area 43, the binary discrimination level varies following such a change. Thus, a stable binarization operation can be secured by a simple configuration.

It is to be noted that this invention is not limited only to the above-described embodiment. For example, as the configuration of the binarization circuit in the data reproducing circuit, such a circuit configuration may be adopted to directly level-discriminate an input magneto-optical signal using the reference level as a threshold value. In addition to the above, various binarization circuit configurations may be adopted. Further, the reference level $c_1$ corresponding to the magneto-optical signal level $a_1$ in the trial write area 42 may be used over one sector. Furthermore, various media such as a magneto-optical card, may be used in addition to the magneto-optical disk as the magneto-optical recording medium.

## Claims

1. A magneto-optical signal reproducing apparatus for reproducing a data sequence from a magneto-optical signal provided by reading out a signal recorded on a magneto-optical recording medium (10) by means of an optical pickup device (12-19,20,30), the apparatus comprising:

   means (22) for binarising said magneto-optical signal, said binarising means (22) comprising means (25) for comparing the magneto-optical signal with a reference level; and reference level controlling means (32) for controlling said reference level in dependency upon a level of a digitised in-phase signal component (b) provided from said optical pickup device; characterised in that the reference level controlling means (32) is adapted to control the reference level, during reproduction of a magneto-optical signal from a data area (43) of the recording medium (10), in dependency on a ratio between the in-phase signal component ($b_2$) provided from said optical pickup device reading said data area (43) and an in-phase signal component ($b_1$) reproduced from a trial writing area (42) provided in a recording area of the recording medium (10).

2. A magneto-optical signal reproducing apparatus according to claim 1, wherein the reference level controlling means (32) is adapted to control the reference level, during reproduction of a magneto-optical signal from a data area (43) of the recording medium (10), in accordance with the following equation:

$$c_2 = a_1 \, x \, f(b_2/b_1)$$

where $c_2$ is the reference level during reproduction of a magneto-optical signal from the data area (43) of the recording medium,

$a_1$ is the magneto-optical signal level reproduced from trial writing area (42) of the recording medium,

f is a predetermined function,

$b_1$ is the in-phase signal component level reproduced from trial writing area (42), and

$b_2$ is the in-phase signal component level reproduced from the data area (43).

3. A magneto-optical signal reproducing apparatus according to claim 1 or 2, and comprising means for controlling the output power of the optical pickup device in dependency on a signal recorded on said trial writing area (42) of the recording medium (10).

4. A magneto-optical signal reproducing apparatus according to claim 2, and comprising a memory storing said function f.

5. A magneto-optical signal reproducing apparatus according to claim 1, wherein the optical pickup device comprises:

a pair of photodetectors (18,19) for detecting polarized light components different to each other, said polarized light components included in a reflected light from said magneto-optical recording medium;

a subtracter (20) for outputting a differential signal between the detection signals each of which is provided from said pair of photodetectors (18,19) respectively; and

an adder (30) for outputting a sum signal of the detection signals each of which is provided from said pair of photodetectors (18,19) respectively.

6. A magneto-optical signal reproducing apparatus according to claim 5, wherein said reference level controlling means (32) determines a reference level for discriminating said differential signal in accordance with a level of said sum signal.

7. A magneto-optical signal reproducing apparatus according to claim 1, wherein said binarization means (22) comprises a subtracter (24) for subtracting from said magneto-optical signal a signal one sample period previous to said magneto-optical signal, and a comparator (25) for comparing said reference level with an output signal of said subtracter.

## Patentansprüche

1. Magnetooptisches Signalwiedergabegerät zur Wiedergabe einer Datensequenz aus einem magnetooptischen Signal, das durch Auslesen eines auf einem magnetooptischen Aufzeichnungsmedium (10) aufgezeichneten Signals mittels einer optischen Abtastvorrichtung (12-19, 20, 30) gewonnen wird,

mit einer Binärisierungseinrichtung (22) zur Binärisierung des magnetooptischen Signals, wobei diese Binärisierungseinrichtung (22) eine Einrichtung (25) zum Vergleichen des magnetooptischen Signals mit einem Referenzpegel aufweist, und

mit einer Referenzpegelsteuereinrichtung (32) zur Steuerung des Referenzpegels in Abhängigkeit von einer digitalisierten gleichphasigen Signalkomponente (b), die von der optischen Abtastvorrichtung geliefert wird,

**dadurch gekennzeichnet**,

daß die Referenzpegelsteuereinrichtung (32) so ausgebildet ist, daß sie während der Wiedergabe eines magnetooptischen Signals aus einem Datenbereich (43) des Aufzeichnungsmediums (10) den Referenzpegel in Abhängigkeit von dem Verhältnis zwischen der gleichphasigen Signalkomponente (b2), die von der den Datenbereich (43) auslesenden optischen Abtastvorrichtung geliefert wird, und einer gleichphasigen Signalkomponente (b1) steuert, die von einem in einem Aufzeichnungsbereich des Aufzeichnungsmediums (10) vorgesehenen Probe-Schreibbereich (43) reproduziert wird.

2. Magnetooptisches Signalwiedergabegerät nach Anspruch 1, bei dem die Referenzpegelsteuereinrichtung (32) so ausgebildet ist, daß sie während der Wiedergabe eines magnetooptischen Signals aus einem Datenbereich (43) des Aufzeichnungsmediums (10).den Referenzpegel nach folgender Gleichung steuert:

$$c_2 = a_1 \times f(b_2/b_1),$$

worin

$c_2$ der Referenzpegel während der Wiedergabe eines magnetooptischen Signals aus dem Probe-Schreibbereich (42) des Aufzeichnungsmediums (10),

$a_1$ der Pegel des aus dem Probe-Schreibbereich (42) des Aufzeichnungsmediums (10) reproduzierten magnetooptischen Signals,

f eine vorbestimmte Funktion,

$b_1$ der Pegel der aus dem Probe-Schreibbereich (42) des Aufzeichnungsmediums (10) reproduzierten gleichphasigen Signalkomponente und

b2 der Pegel der aus dem Aufzeichnungsbereich (43) des Aufzeichnungsmediums (10) reproduzierten gleichphasigen Signalkomponente

bedeuten.

3. Magnetooptisches Signalwiedergabegerät nach Anspruch 1 oder 2 mit einer Einrichtung zur Steuerung der Ausgangsleistung der optischen Abtastvorrichtung in Abhängigkeit von einem in dem Probe-Schreibbereich (42) des Aufzeichnungsmediums (19) aufgezeichneten Signal.

4. Magnetooptisches Signalwiedergabegerät nach Anspruch 2 mit einem Speicher zur Speicherung der genannten Funktion f.

5. Magnetooptisches Signalwiedergabegerät nach Anspruch 1, bei dem die optische Abtastvorrichtung aufweist.

ein Paar von Fotodetektoren (18, 19) zur Detektierung von polarisierten Lichtkomponenten, die in dem von dem magnetooptischen Aufzeichnungsmedium reflektierten Licht enthalten sind, einen Subtrahierer (20) zur Ausgabe eines Differenzsignals, das der Differenz zwischen den einzelnen Detektorsignalen entspricht, die das Paar von Fotodetektoren (18, 19) liefert, und einen Addierer (30) zur Ausgabe eines Summensignals, das der Summe der einzelnen Detektorsignale entspricht, die das Paar von Fotodetektoren (18, 19) liefert.

6. Magnetooptisches Signalwiedergabegerät nach Anspruch 5, bei dem die Referenzpegelsteuereinrichtung (32) nach Maßgabe des Pegels des Summensignals einen Referenzpegel zur Diskriminierung des Differenzsignals bestimmt.

7. Magnetooptisches Signalwiedergabegerät nach Anspruch 1, bei dem die Binärisierungseinrichtung (22) aufweist:

einen Subtrahierer (24) zum Subtrahieren eines eine Abtastperiode vor dem magnetooptischen Signal liegenden Signals von dem magnetooptischen Signal und einen Vergleicher (25) zum Vergleichen des genannten Referenzpegels mit dem Ausgangssignal des Subtrahierers (24).

**Revendications**

1. Appareil de reproduction de signal magnéto-optique servant à reproduire une séquence de données à partir d'un signal magnéto-optique produit par lecture d'un signal enregistré sur un support d'enregistrement magnéto-optique (10) au moyen d'un dispositif capteur optique (12 à 19, 20, 30), l'appareil comprenant :

un moyen (22) qui sert à mettre sous forme binaire ledit signal magnéto-optique, ledit moyen de mise sous forme binaire (22) comprenant un moyen (25) qui permet de comparer le signal magnéto-optique avec un niveau de référence ; et
un moyen (32) de commande de niveau de référence qui sert à ajuster ledit niveau de référence en fonction du niveau d'une composante de signal en phase numérisée (b) produite par ledit dispositif capteur optique ;
caractérisé en ce que ledit moyen de commande de niveau de référence (32) est conçu pour ajuster le niveau de référence, pendant la reproduction d'un signal magnéto-optique à partir d'une zone de données (43) du support d'enregistrement (10), en fonction du rapport entre la composante de signal en phase ($b_2$) produite via la lecture, par le dispositif capteur optique, de ladite zone de données (43) et une composante de signal en phase ($b_1$) reproduite à partir d'une zone d'écriture d'essai (42) prévue dans une zone d'enregistrement du support d'enregistrement (10).

2. Appareil de reproduction de signal magnéto-optique selon la revendication 1, où le moyen de commande de niveau de référence (32) est conçu pour ajuster le niveau de référence, pendant la reproduction d'un signal magnéto-optique à partir d'une zone de données (43) du support d'enregistrement (10), selon l'équation suivante :

$$c_2 = a_1 \cdot f(b_2 / b_1)$$

où $c_2$ est le niveau de référence existant pendant la reproduction d'un signal magnéto-optique à partir de la zone de données (43) du support d'enregistrement,

$a_1$ est le niveau de signal magnéto-optique reproduit à partir de la zone d'écriture d'essai (42) du support d'enregistrement,
f est une fonction prédéterminée,
$b_1$ est le niveau de la composante de signal en phase reproduit à partir de la zone d'écriture d'essai (42), et
$b_2$ est le niveau de la composante de signal en phase reproduit à partir de la zone de données (43).

3. Appareil de reproduction de signal magnéto-optique selon la revendication 1 ou 2, comprenant un moyen qui permet de commander la puissance de sortie du dispositif capteur optique en fonction d'un signal enregistré sur ladite zone d'écriture d'essai (42) du support d'enregistrement (10).

4. Appareil de reproduction de signal magnéto-optique selon la revendication 2, comprenant une mémoire qui mémorise ladite fonction f.

5. Appareil de reproduction de signal magnéto-optique selon la revendication 1, où le dispositif capteur optique comprend :

une paire de photodétecteurs (18, 19) servant à détecter des composantes lumineuses polarisées différentes l'une de l'autre, lesdites composantes lumineuses polarisées étant contenues dans la lumière réfléchie par ledit support d'enregistrement magnéto-optique ;
un soustracteur (20) servant à délivrer un signal formé par la différence entre les signaux de détection qui sont respectivement produits par ladite paire de photodétecteurs (18, 19) ; et
un additionneur (30) servant à délivrer un signal qui est la somme des signaux de détection respectivement produits par ladite paire de photo-détecteurs (18, 19).

6. Appareil de reproduction de signal magnéto-optique selon la revendication 5, où ledit moyen de commande de niveau de référence (32) détermine un niveau de référence permettant de distinguer des niveaux dans ledit signal de différence en fonction du niveau dudit signal de somme.

7. Appareil de reproduction de signal magnéto-optique selon la revendication 1, où ledit moyen de mise sous forme binaire-(22) comprend un soustracteur (24) permettant de soustraire au signal magnéto-optique un signal correspondant à une période d'échantillonnage avant ledit signal magnéto-optique, et un comparateur (25) servant à comparer ledit niveau de référence avec le signal de sortie dudit soustracteur.

# FIG.1

EP 0 430 811 B1

FIG.2

DIGITAL DATA (a)

DATA SIGNAL OF THE NRZI SYSTEM (b)

RF SIGNAL (c)

SAMPLING CLOCK (d)

SAMPLE DATA SIGNAL (e)

DIFFERENCE OUTPUT (f)

BINARY SIGNAL (g)

FIG.3

EP 0 430 811 B1

# FIG. 4

c1

a1

# FIG. 5

f(b2/b1)

b2/b1